# EUROPÄISCHE PATENTSCHRIFT

(11) **EP 1 000 266 B1**
(45) Veröffentlichungstag und Bekanntmachung des Hinweises auf die Patenterteilung: **11.04.2001**
(21) Anmeldenummer: 98942629.1
(22) Anmeldetag: 25.07.1998
(51) Int. Cl.: F16D 23/06, F16H 3/78

(54) **SCHALTKUPPLUNG**
CLUTCH
EMBRAYAGE

(30) Priorität: 02.08.1997 DE 19733519
(43) Veröffentlichungstag der Anmeldung: 17.05.2000
(73) Patentinhaber: ZF FRIEDRICHSHAFEN Aktiengesellschaft, 88038 Friedrichshafen (DE)
(72) Erfinder: BADER, Josef, D-88045 Friedrichshafen (DE); BURI, Gerhard, D-88677 Markdorf (DE); RENNER, Stefan, D-78351 Bodman-Ludwigshafen (DE)
(86) Internationale Anmeldenummer: EP9804677
(87) Internationale Veröffentlichungsnummer: WO9906728

(56) Entgegenhaltungen:
- EP-A- 0 423 863
- EP-A- 0 663 541
- WO-A-92/01173

## Beschreibung

Die Erfindung betrifft eine Schaltkupplung mit den Merkmalen nach dem Oberbegriff von Anspruch 1.

In Schaltgetrieben, die unter Zugkraftunterbrechung geschaltet werden, d. h., daß eine Eingangswelle während des Schaltvorgangs durch eine Kupplung von einer Antriebsmaschine getrennt wird, kann man den jeweiligen Gang mit einer Schaltkupplung der eingangs beschriebenen Art einlegen, indem eine Schaltverzahnung einer Schiebemuffe in eine Kuppelverzahnung eines Kupplungskörpers geschoben wird, der an einem zu kuppelnden Getriebeelement befestigt ist, z. B. an einem Zahnrad oder Getriebegehäuse. Dabei wird das Drehmoment im geschalteten Zustand von einem Getriebeelement über den Kupplungskörper, die Kuppelverzahnung, die Schaltverzahnung, die Schiebemuffe und die Muffenführung auf ein anderes Getriebeelement, z. B. ein Zahnrad oder eine Welle, übertragen oder am Getriebegehäuse abgestützt. Der geschaltete Gang bestimmt das Übersetzungsverhältnis und damit das Drehzahlverhältnis zwischen der Eingangswelle und einer Ausgangswelle des Getriebes. Die nicht gekuppelten Getriebeelemente, z. B. frei umlaufende, ständig im Eingriff befindliche Zahnräder, der übrigen Gänge laufen mit einer ihrer Übersetzung entsprechenden Differenzdrehzahl zu den geschalteten Getriebeelementen. Wird von einem Gang zu einem anderen gewechselt, müssen die zu kuppelnden Teile während des Schaltens auf eine annähernd gleiche Drehzahl gebracht werden, bevor die Schaltverzahnung der Schiebemuffe in die Kuppelverzahnung des zu schaltenden Kupplungskörpers eingreifen kann.

Hierzu dient eine Synchronisiereinrichtung. Sie besteht im wesentlichen aus Reibflächen, z. B. einem Reibkonus, am Kupplungskörper und Reibflächen, z. B. einem Gegenkonus, an einem Synchronisierring, der zudem eine Sperrverzahnung aufweist. Der Synchronisierring läuft mit der Schiebemuffe um, kann sich jedoch zwischen zwei Anschlägen gegenüber dieser um einen begrenzten Drehwinkel drehen, damit eine Sperrvorrichtung, z. B. eine Sperrverzahnung am Synchronisierring, in Sperrstellung gebracht wird.

Bewegt man die Muffe in Richtung des zu schaltenden Kupplungskörpers, wird der Synchronisierring mit seinem Gegenkonus über nachgebende Rastmittel gegen den Reibkonus des Kupplungskörpers gedrückt. Dabei verdreht sich der Synchronisierring relativ zur Muffe, so daß stirnseitige Schrägflächen der Schaltverzahnung auf entsprechende Sperrflächen der Sperrverzahnung stoßen. Dadurch wird eine Axialkraft auf den Synchronisierring und die Reibflächen ausgeübt. Die Schaltkraft erzeugt gleichzeitig über die Schrägflächen eine Rückstellkraft auf den Synchronisierring. Diese übersteigt bei Gleichlauf der Teile die an den Reibflächen wirkende Umfangskraft und bringt den Synchronisierring in eine Mittelstellung, bei der die Muffe durchgeschaltet werden kann.

Solche Schaltkupplungen sind bekannt, und zwar für Schaltgetriebe in Vorgelegebauweise durch die EP 0 184 077 B1. Dabei ist die Schiebemuffe auf einem inneren Muffenträger verschiebbar angeordnet und die Synchronisierringe sind gegenüber dem Muffenträger um einen durch Anschläge begrenzten Drehwinkel drehbar axial geführt. Ferner sind zwischen dem Muffenträger und dem Synchronisierring Tangentialfedern so angeordnet, daß sie die beiden Teile in Neutralstellung entgegen der Laufrichtung gegen ihre Anschläge drücken.

Aus der DE 34 44 562 A1 ist eine Schaltkupplung für eine Planetenstufe bekannt, die Synchronisierringe ohne eine Sperrverzahnung hat. Die Synchronisierringe greifen mit einer Mitnahmeverzahnung annähernd über der gesamten axialen Erstreckung in die Schaltverzahnung der Schiebemuffe ein, ohne einen begrenzten Drehwinkel zuzulassen.

Der Erfindung liegt die Aufgabe zugrunde, bei gattungsgemäßen Schaltkupplungen eine Sperrsynchronisierung auch dann zu ermöglichen, wenn die Schiebemuffe an ihrem äußeren Umfang geführt und sehr schmal ist. Sie wird mit den Merkmalen von Anspruch 1 gelöst.

Nach der Erfindung greifen die Synchronisierringe mit Nocken in Nuten der Schiebemuffe ein, und zwar mit einem solchen Spiel, daß ein begrenzter Drehwinkel zwischen den Synchronisierringen und der Schiebemuffe zugelassen wird, damit eine Sperrverzahnung auf den Synchronisierringen in eine Sperrstellung gebracht werden kann. Damit die Schiebemuffe, insbesondere, wenn sie schmal ausgebildet ist, in einer Schaltstellung nicht außer Eingriff kommt mit den Nocken des anderen Synchronisierrings, sind einige der auf den Umfang zweckmäßigerweise gleichmäßig verteilten Nocken zum anderen Synchronisierring hin verlängert und reichen über den Spalt zwischen den Synchronisierringen in den Bereich des anderen Synchronisierrings hinein.

Zweckmäßigerweise greifen die Nocken der beiden Synchronisierringe in gleiche Nuten der Schiebemuffe, wobei die Nocken des einen Synchronisierrings um einen gleichen Betrag verlängert sind wie die Nocken des anderen Synchronisierrings verkürzt sind.

Es besteht auch die Möglichkeit, daß die Nocken, die in eine Nut eingreifen, nicht stumpf gegenüberliegen, sondern über einen Teil ihrer Erstreckung in Umfangsrichtung verlängert sind und zu dem verlängerten Teil des anderen Nockens hin Anlageflächen aufweisen. Durch diese Koppelung wird erreicht, daß die Sperrverzahnung des einen Synchronisierrings in die Sperrstellung verschoben wird, sobald die Sperrverzahnung des anderen Synchronisierrings beim Schalten den Weg freigibt. Dadurch kann die Schiebemuffe von der einen Schaltposition nicht ungehindert in die andere Schaltposition verschoben werden, ohne auf die Sperrverzahnung des entsprechenden Synchronrings zu treffen.

Da die Koppelglieder mechanisch fest mit den Synchronringen verbunden sind, entsteht kein Prellen oder Verspannen der Synchronisiereinrichtung, wie dies z. B. bei Federelementen der Fall ist.

Die Synchronisierringe können in Sperrposition gebracht werden, indem die Schiebemuffe über Rastelemente, z. B. eine Ringfeder, axial auf sie einwirkt und ihren Reibkonus gegen einen Gegenkonus am Kupplungskörper drückt. Durch die in Umfangsrichtung wirkende Reibkraft wird dann der Synchronisierring um den begrenzten Drehwinkel verdreht, so daß der weitere Schaltweg der Schiebemuffe bis zur Synchrondrehzahl der zu kuppelnden Getriebeteile durch die Sperrverzahnung blockiert ist. Die Ringfeder baut axial sehr schmal, so daß von den verlängerten Nocken nur ein kleiner Spalt überbrückt zu werden braucht.

Nach einer weiteren Ausgestaltung der Erfindung werden die Synchronisierringe durch Tangentialfedern, die zwischen den Nocken der Synchronisierringe oder zwischen den Nocken der Synchronisierringe und den Nuten der Schiebemuffe wirken, bis zum Ende der Synchronisierung in Sperrstellung gehalten. Hierdurch kann die Ringfeder entfallen und der Zwischenraum zwischen den Synchronisierringen bis auf ein Minimum reduziert werden. Ferner braucht der Synchronisierring nur in eine Richtung verdreht werden, so daß sich ein halber Verdrehwinkel ergibt. Entsprechend braucht die Sperrverzahnung nur einseitig abgeschrägt zu werden und die Verzahnung kann verstärkt werden.

In der Zeichnung ist ein Ausführungsbeispiel der Erfindung dargestellt. Es zeigen:
- Fig. 1: einen teilweisen Längsschnitt durch eine erfindungsgemäße Schaltkupplung mit einer Tangentialfeder;
- Fig. 2: eine teilweise Abwicklung eines Zylinderschnitts entsprechend der Linie II-II in Fig. 1;
- Fig. 3: einen teilweisen Querschnitt entsprechend der Linie III-III in Fig. 2;
- Fig. 4 bis 6: eine Ausführung, wie in Fig. 1 und 2, jedoch mit einer Tangentialfeder und
- Fig. 7: eine Ausführung mit gekoppelten Synchronisierringen in einer Darstellung wie in Fig. 5.

Eine Schaltkupplung 1 dient zum Schalten einer Planetenstufe 2, die ein Hohlrad 3, Planetenräder 4 und ein Sonnenrad 7 umfaßt. Die Planetenräder 4 sind auf Planetenbolzen 5 mittels Wälzlagern 6 in einem Planetenträger 8 gelagert. Das Sonnenrad 7 ist mit einer nicht näher dargestellten Eingangswelle verbunden und der Planetenträger 8, der mittels eines Wälzlagers 10 in einem Getriebegehäuse 9 gelagert ist, mit einer nicht näher dargestellten Ausgangswelle.

Die Schaltkupplung 1 besitzt eine Schiebemuffe 17 mit einer Nut 18 für eine nicht näher dargestellte Schaltgabel. Ferner hat sie eine Schaltverzahnung 19. Im gezeichneten Zustand greift die Schaltverzahnung 19 durch eine Sperrverzahnung 31 eines Synchronisierrings 29 in eine Kuppelverzahnung 23 eines Kupplungskörpers 21 ein.

Die Schiebemuffe 17 ist über eine Mitnahmeverzahnung 11 mit dem Hohlrad 3 drehfest verbunden, das gleichzeitig zur Führung der Schiebemuffe 17 dient. Axial ist die Schiebemuffe 17 im Hohlrad 3 durch einen Sicherungsring 15 gesichert. Der Kupplungskörper 21 ist über eine Mitnahmeverzahnung 13 und einen Sicherungsring 16 in einem Getriebegehäuse 9 fixiert. Somit ist in dem gezeichneten Schaltzustand das Hohlrad 3 über die Schiebemuffe 17 und den Kupplungskörper 21 mit dem Getriebegehäuse 9 verbunden.

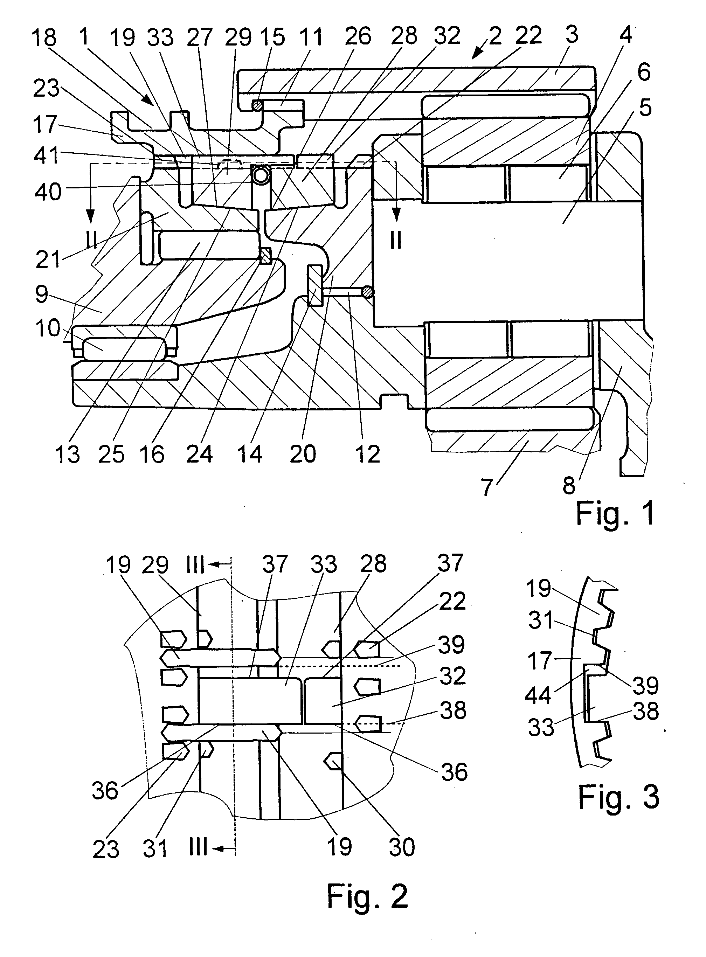

Zur Schaltkupplung 1 gehört ferner ein weiterer Kupplungskörper 20 mit einer Kuppelverzahnung 22, der über eine Mitnahmeverzahnung 12 und einen Sicherungsring 14 an dem Planetenträger 8 fixiert ist und mit einem Synchronisierring 28 zusammenarbeitet. Wird die Schiebemuffe 17 entsprechend der Fig. 1 nach rechts verschoben, wird in einen anderen Gang bzw. Getriebegruppe gewechselt, bei der das Hohlrad 3 mit dem Planetenträger 8 verbunden ist und mit diesem gemeinsam umläuft.

Die Synchronisierringe 28, 29 haben mehrere, in der Regel sechs, über den Umfang verteilte Nocken 32, 33, die radial in Nuten 44 der Schiebemuffe 17 eingreifen. Die Nuten 44 sind breiter als die Nocken 32, 33, so daß sie einen begrenzten Drehwinkel zwischen der Schiebemuffe 17 und den Synchronisierringen 28, 29 zulassen. Die Nocken 32, 33 der beiden Synchronisierringe 28, 29 greifen zweckmäßigerweise in die gleichen Nuten 44 der Schiebemuffe 17 ein, mit deren Anschlägen 38, 39 ihre Flanken 36, 37 zusammenwirken.

Einige der Nocken 32 und 33 sind axial im Bereich der zugewandten Stirnseiten gekürzt bzw. verlängert, wobei die gekürzten Nocken 32 des einen Synchronisierrings 28 mit den verlängerten Nocken 33 des anderen Synchronisierrings 29 und umgekehrt zusammenwirken, indem die verlängerten Nokken 32, 33 in den Bereich des anderen Synchronisierrings 28, 29 reichen und den Spalt zwischen den Synchronisierringen überbrücken. Somit ist gewährleistet, daß selbst bei schmalen Schiebemuffen 17 und allen Schaltpositionen die Nocken 32, 33 mit den Nuten 44 in Eingriff bleiben.

Bei der Ausführung nach Fig. 1 bis 3 ist zwischen den Synchronisierringen 28, 29 eine Ringfeder 40 vorgesehen, die in Neutralstellung der Schiebemuffe 17 in eine Rastnut 41 der Schiebemuffe 17 eingreift. Wenn die Schiebemuffe 17 aus der Neutralstellung bewegt wird, übt die Ringfeder 40 auf die Synchronisierringe 28, 29 eine Axialkraft aus, die über die Reibkonusse 24, 25 und die Gegenkonusse 26, 27 Umfangskräfte erzeugen, die die Sperrverzahnungen 30 oder 31 in Sperrstellung bringen. Weitere, nicht dargestellte Rastnuten können für die Schaltstellungen vorgesehen werden.

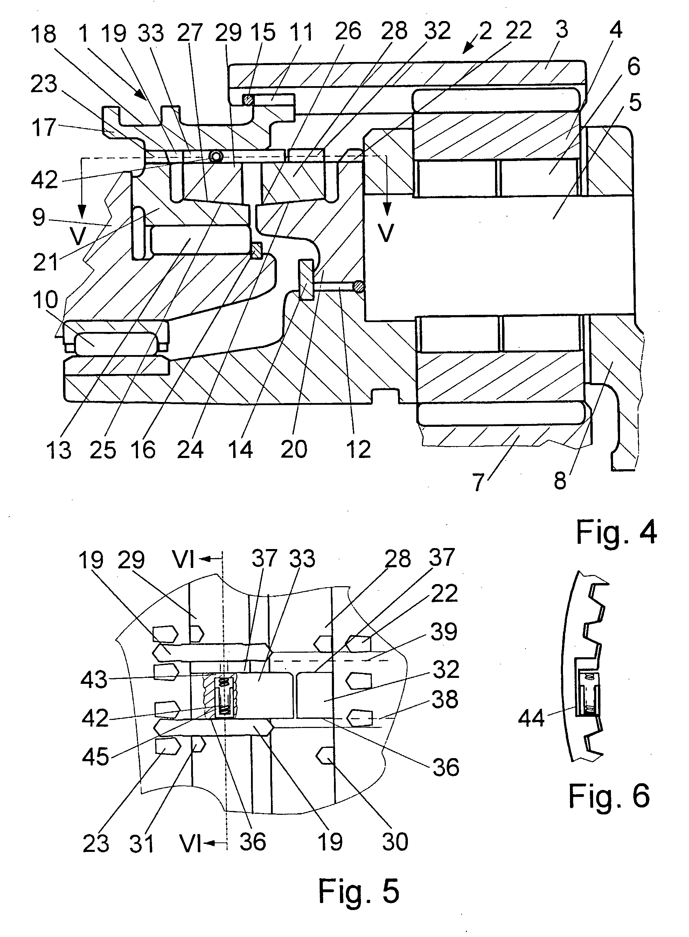

Bei der Ausführung nach Fig. 4 bis 6 verstellen Tangentialfedern 42 die Sperrverzahnung 30 oder 31 in Sperrposition. Zweckmäßigerweise werden für jeden Synchronisierring 28, 29 mehrere, auf den Umfang gleichmäßig verteilte Tangentialfedern 42 verwendet, die zwischen den Nocken 32, 33 und der Schiebemuffe 17 angeordnet und in Bohrungen 45 in den Nocken 32, 33 über Führungshülsen 43 geführt sind.

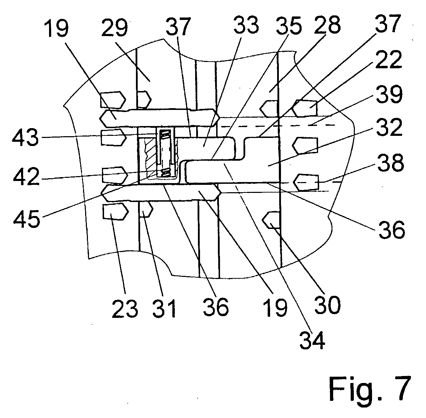

Die Ausführung nach Fig. 7 zeigt Nocken 32, 33 die nur über einen Teil ihrer Breite verlängert sind und in dem verlängerten Bereich Anlageflächen 34, 35 aufweisen, mit denen sie sich an Anlageflächen der Nocken des anderen Synchronisierrings abstützen. Die äußeren Flanken 36, 37 der Nocken 32 bzw. 33 ermöglichen zwischen Anschlägen 38, 39 einen begrenzten Verdrehwinkel. Über die Nocken 32, 33 sind die Synchronisierringe 28, 29 so miteinander gekoppelt, daß der eine Synchronisierring 29 den anderen Synchronisierring 28 mit seiner Sperrverzahnung 30 in eine Sperrstellung verdreht, sobald er den Durchgang für die Schaltverzahnung 19 frei gibt und umgekehrt.

Wird nun die Schiebemuffe 17 aus der geschalteten Position (Fig. 1) nach rechts verschoben, so trifft ihre Schaltverzahnung 19 auf die Sperrverzahnung 30 des Synchronisierrings 28. Dadurch wird der Synchronisierring 28 mit seinem Reibkonus 24 gegen einen Gegenkonus 26 gedrückt. Durch die stirnseitige Abschrägung der Schaltverzahnung 19 und der Sperrverzahnung 30 (Fig. 2) entsteht eine Kraftkomponente in Umfangsrichtung, die den Synchronisierring 28 samt Sperrverzahnung 30 aus der Sperrstellung verdreht, sobald Gleichlauf zwischen der Schiebemuffe 17 und dem Kupplungskörper 20 erreicht ist. Bei Gleichlauf kann die Schaltverzahnung 19 in die Kuppelverzahnung 22 des Kupplungskörpers 20 eingreifen, wodurch nunmehr das Hohlrad 3 mit dem Planetenträger 8 gekuppelt ist.

### Bezugszeichen

- 1: Schaltkupplung
- 2: Planetenstufe
- 3: Hohlrad
- 4: Planetenrad
- 5: Planetenbolzen
- 6: Wälzlager
- 7: Sonnenrad
- 8: Planetenträger
- 9: Getriebegehäuse
- 10: Wälzlager
- 11: Mitnahmeverzahnung
- 12: Mitnahmeverzahnung
- 13: Mitnahmeverzahnung
- 14: Sicherungsring
- 15: Sicherungsring
- 16: Sicherungsring
- 17: Schiebemuffe
- 18: Nut
- 19: Schaltverzahnung
- 20: Kupplungskörper
- 21: Kupplungskörper
- 22: Kuppelverzahnung
- 23: Kuppelverzahnung
- 24: Reibkonus
- 25: Reibkonus
- 26: Gegenkonus
- 27: Gegenkonus
- 28: Synchronisierring
- 29: Synchronisierring
- 30: Sperrverzahnung
- 31: Sperrverzahnung
- 32: Nocken
- 33: Nocken
- 34: Anlagefläche
- 35: Anlagefläche
- 36: Flanke
- 37: Flanke
- 38: Anschlag
- 39: Anschlag
- 40: Ringfeder
- 41: Rastnut
- 42: Tangentialfeder
- 43: Führungshülse
- 44: Nut
- 45: Bohrung

## Patentansprüche

1. Schaltkupplung (1), die aus einer Schiebemuffe (17) mit einer Schaltverzahnung (19), aus zwei zu beiden Seiten der Schiebemuffe (17) angeordneten Synchronisierringen (28, 29) mit einer Sperrverzahnung (30, 31) und Reibfläche (24, 25), die um einen begrenzten Drehwinkel zur Schiebemuffe (17) verdrehbar sind, und aus zwei mit den Synchronisierringen (28, 29) zusammenarbeitenden Kupplungskörpern (20, 21) mit einer Kuppelverzahnung (22, 23) und Gegenreibfläche (26, 27) aufgebaut ist, wobei die Schiebemuffe (17) stets über eine drehfest mit einem Getriebeelement (3) und im geschalteten Zustand über die Schaltverzahnung (19) und die Kuppelverzahnung (22, 23) formschlüssig mit einem der Kupplungskörper (20, 21) verbunden ist, dadurch **gekennzeichnet**, daß die Synchronisierringe (28, 29) mehrere, auf den Umfang verteilte Nocken (32, 33) aufweisen, die in Nuten (44) der am äußeren Umfang geführten Schiebemuffe (17) mit Spiel eingreifen und so den begrenzten Drehwinkel definieren, wobei einige Nokken (32) des einen Synchronisierrings (28) in den Bereich des jeweils anderen Synchronisierrings (29) reichen.

2. Schaltkupplung (1) nach Anspruch 1, dadurch **gekennzeichnet**, daß Nocken (32, 33) der beiden Synchronisierringe (28, 29) in die gleichen Nuten (44) der Schiebemuffe (17) eingreifen und an den zugewandten Stirnseiten wechselweise gekürzt bzw. verlängert sind.

3. Schaltkupplung (1) nach Anspruch 2, dadurch **gekennzeichnet**, daß im Bereich der verlängerten Nocken (32, 33) zwischen diesen Nocken (32, 33) Tangentialfedern (42) angeordnet sind.

4. Schaltkupplung (1) nach einem der vorhergehenden Ansprüche, dadurch **gekennzeichnet**, daß die Nocken (32, 33) der beiden Synchronisierringe (28, 29) in die gleichen Nuten (44) der Schiebemuffe (17) eingreifen und so miteinander gekoppelt sind, daß sich im geschalteten Zustand auf der einen Seite die Sperrverzahnung (30) des Synchronisierrings (28) auf der nicht geschalteten Seite in Sperrposition befindet.

5. Schaltkupplung (1) nach Anspruch 4, dadurch **gekennzeichnet**, daß sich die Nocken (32, 33) des einen Synchronisierrings (28, 29) auf einem Teil ihrer Breite axial in den Bereich der Nocken (32, 33) des anderen Synchronisierrings (28, 29) erstrecken und in diesem Bereich Anlageflächen (34, 35) aufweisen.

6. Schaltkupplung (1) nach Anspruch 1, 2, oder 5, dadurch **gekennzeichnet**, daß zwischen den Synchronisierringen (28, 29) eine Ringfeder vorgesehen ist, die in eine Nut der Schiebemuffe (17) in einer Mittelstellung der Schiebemuffe (17) einrastet und von den verlängerten Nocken (32, 33) am äußeren Umfang überdeckt wird.

7. Schaltkupplung (1) nach einem der vorherigen Ansprüche, dadurch **gekennzeichnet**, daß der begrenzte Drehwinkel so definiert ist, daß der Synchronring (28, 29) nur in eine Richtung in eine Sperrstellung verdrehbar ist.

## Claims

1. Clutch (1) consisting of a sliding sleeve (17) with engaging teeth (19), of two synchronizing rings (28, 29) disposed on both sides of the sliding sleeve (17) and having locking teeth (30, 31) and a friction surface (24, 25), which rings can be turned relative to the sliding sleeve (17) about a limited rotational angle, and of two clutch bodies (20, 21) which cooperate with the synchronizing rings (28, 29) and have coupling teeth (22, 23) and a counter friction surface (26, 27), wherein the sliding sleeve (17) is constantly non-rotatably connected to a gear element (3) and, in the engaged state, positively connected to one of the clutch bodies (20, 21) via the engaging teeth (19) and the coupling teeth (22, 23), characterised in that the synchronizing rings (28, 29) comprise a plurality of projections (32, 33) which are distributed over the periphery and engage with clearance in grooves (44) of the sliding sleeve (17), which is guided at the external periphery, and thus define the limited rotational angle, wherein some projections (32) of one synchronizing ring (28) extend into the area of the respective other synchronising ring (29).

2. Clutch (1) according to Claim 1, characterised in that projections (32, 33) of both synchronizing rings (28, 29) engage in the same grooves (44) of the sliding sleeve (17) and are alternately shortened or lengthened at the facing front sides.

3. Clutch (1) according to Claim 2, characterised in that tangential springs (42) are disposed in the area of the lengthened projections (32, 33) between these projections (32, 33).

4. Clutch (1) according to any one of the preceding Claims, characterised in that the projections (32, 33) of both synchronizing rings (28, 29) engage in the same grooves (44) of the sliding sleeve (17) and are thus coupled together such that when engaged on one side the locking teeth (30) of the synchronizing ring (28) are in the locking position on the non-engaged side.

5. Clutch (1) according to Claim 4, characterised in that the projections (32, 33) of one synchronizing ring (28, 29) extend axially over a part of their width into the area of the projections (32, 33) of the other synchronizing ring (28, 29) and have bearing surfaces (34, 35) in this area.

6. Clutch (1) according to Claim 1, 2 or 5, characterised in that an annular spring is provided between the synchronizing rings (28, 29), engages in a groove of the sliding sleeve (17) when the sliding sleeve (17) is in a middle position and is covered by the lengthened projections (32, 33) at the external periphery.

7. Clutch (1) according to any one of the preceding Claims, characterised in that the limited rotational angle is defined such that the synchronizing ring (28, 29) can only be turned into a locking position in one direction.

## Revendications

1. Embrayage (1) composé d'un coulisseau (17) doté d'une denture de crabotage (19). de deux cônes de synchronisation (28, 29) disposés des deux côtés du coulisseau (17) dotés d'une denture de verrouillage (30, 31) et d'une surface de frottement (24, 25); les dits cônes de synchronisation étant orientables d'un angle de rotation limité par rapport au coulisseau (17) et composés de deux anneaux de crabotage (20, 21) coopérants avec les cônes de synchronisation (28, 29) lesquels sont dotés d'une denture d'accouplement (22, 23) et d'une contre-surface de frottement (26, 27), sachant que le coulisseau (17) est toujours lié de façon à être solidaire en rotation à un élément de la boîte de vitesses (3) et que, en l'état embrayé, le coulisseau est lié par l'intermédiaire de la denture de crabotage (19) et la denture d'accouplement (22, 23) à engagement positif à un des anneaux de crabotage (20, 21), **caractérisé** en ce que les cônes de synchronisation (28, 29) présentent plusieurs cames (32, 33) reparties sur le périmètre, engrenant avec du jeu dans les rainures (44) du coulisseau (17) guidé sur le périmètre extérieur, en définissant ainsi l'angle de rotation limité, et sachant que quelques-unes des cames (32) de l'un des cônes de synchronisation (28) s'étendent jusqu'à la zone de l'autre cône de synchronisation (29) et vice versa.

2. Embrayage (1) selon la revendication 1, **caractérisé** en ce que les cames (32, 33) des deux cônes de synchronisation (28, 29) engrènent dans les mêmes rainures (44) du coulisseau (17) et en ce que les faces frontales de ces cames, qui sont tournées respectivement l'une contre l'autre, sont, en alternance, raccourcies ou allongées.

3. Embrayage (1) selon la revendication 2, **caractérisé** en ce que dans la zone des cames allongées (32, 33) sont disposés, entre ces cames (32, 33), des ressorts tangentiels (42).

4. Embrayage (1) selon une des revendications ci-dessus, **caractérisé** en ce que les cames (32, 33) des deux cônes de synchronisation (28, 29) engrènent dans les mêmes rainures (44) du coulisseau (17), étant ainsi accouplées l'une avec l'autre de façon à ce que, dans l'état embrayé, d'un côté la denture de verrouillage (30) du cône de synchronisation (28) se trouve, du côté pas engagé, en position de verrouillage.

5. Embrayage (1) selon la revendication 4, c**aractérisé** en ce que les cames (32, 33) d'un des cônes de synchronisation (28, 29) s'étendent avec une partie de leur largeur dans le sens axial jusqu'à la zone des cames (32, 33) de l'autre cône de synchronisation (28, 29) et en ce qu'elles présentent dans cette zone des surfaces d'appui (34, 35).

6. Embrayage (1) selon les revendications 1, 2 ou 5, **caractérisé** en ce que entre les cônes de synchronisation (28, 29) se trouve un ressort-bague qui vient s'engager dans une rainure du coulisseau (17), le coulisseau (17) se trouvant dans une position centrale, et en ce que le ressort-bague est couvert sur le périmètre extérieur par les cames allongées (32, 33).

7. Embrayage (1) selon une des revendications ci-dessus, **caractérisé** en ce que l'angle de rotation limité est défini de façon à ce qu'il ne soit pas possible de tourner le cône de synchronisation (28, 29) vers une position de verrouillage que dans un sens.
